Europäisches Patentamt

(19) European Patent Office

Office européen des brevets

(11) Veröffentlichungsnummer: **0 013 001**
**B1**

(12) **EUROPÄISCHE PATENTSCHRIFT**

(45) Veröffentlichungstag der Patentschrift:
25.11.81

(51) Int. Cl.³: **C 03 B 35/20, C 03 B 23/03**

(21) Anmeldenummer: **79105281.4**

(22) Anmeldetag: **20.12.79**

(54) **Vorrichtung zum Transportieren einer Glasscheibe in eine mit Presswerkzeugen ausgerüstete Biegestation.**

(30) Priorität: **22.12.78 FR 7836188**

(43) Veröffentlichungstag der Anmeldung:
**09.07.80 Patentblatt 80/14**

(45) Bekanntmachung des Hinweises auf die Patenterteilung:
**25.11.81 Patentblatt 81/47**

(84) Benannte Vertragsstaaten:
**BE DE FR GB IT NL SE**

(56) Entgegenhaltungen:
**DE-A-1 937 041**
**FR-A-1 020 465**

(73) Patentinhaber: **SAINT-GOBAIN INDUSTRIES, 62, Bd Victor Hugo, F-92209 Neuilly sur Seine (FR)**

(84) Benannte Vertragsstaaten: **BE FR GB IT NL SE**

(73) Patentinhaber: **Vereinigte Glaswerke GmbH, Viktoriaallee 3-5, D-5100 Aachen (DE)**

(84) Benannte Vertragsstaaten: **DE**

(72) Erfinder: **Roth, Mario, Dipl.-Ing., Laurentiusstrasse 13, D-5100 Aachen-Laurensberg (DE)**
Erfinder: **Pagel, Werner, Christian-Derichs-Strasse 4, D-5120 Herzogenrath (DE)**
Erfinder: **Schmidt, Günther, Uersfeld 29, D-5100 Aachen-Richterich (DE)**

(74) Vertreter: **Biermann, Wilhelm, Dr.-Ing., Compagnie de Saint-Gobain-Pont-A-Mousson Zweigniederlassung Deutschland Postfach 14 90 Oppenhoffallee 143, D-5100 Aachen (DE)**

## Vorrichtung zum Transportieren einer Glasscheibe in eine mit Preßwerkzeugen ausgerüstete Biegestation

Die Erfindung betrifft eine Vorrichtung zum Transportieren einer an zangenförmigen Greifvorrichtungen hängenden Glasscheibe durch einen Ofen, eine mit Preßwerkzeugen ausgerüstete Biegestation und ggf. eine Vorspannstation, bestehend aus einem oberhalb des Ofens bzw. der Biegestation verfahrbaren Wagen, an dem ein nach unten ragender Tragrahmen mit einem die zangenförmigen Greifvorrichtungen tragenden horizontalen Tragholm befestigt ist, wobei die Transportvorrichtung einerseits und die Biegevorrichtung andererseits mit zusammenwirkenden Kupplungsteilen zum Arretieren der Transportvorrichtung oberhalb der Biegeform versehen sind, die jeweils mittig an der Transportvorrichtung bzw. an der Biegevorrichtung angeordnet sind, und wobei der horizontale Tragholm in seinen seitlichen Lagerpunkten in horizontaler Ebene verschiebbar gelagert ist.

Bei einer aus der FR-A-1 020 465 bekannten derartigen Transportvorrichtung besteht der horizontale Tragholm aus einer Reihe von um vertikale Achsen verschwenkbar miteinander verbundenen Gliedern und wird in der Biegepresse durch oberhalb der Biegeformen angeordnete zusätzliche Verformungsglieder in eine der Scheibenform entsprechende Form gebogen, um die Entstehung von auf die Glasscheibe einwirkenden deformierenden Kräften zu vermeiden. Dieser verformbare Tragholm ist an dem starren Tragrahmen in der Mitte über eine Hebelverbindung angelenkt. Das Kupplungsteil der Transportvorrichtung befindet sich mittig an dem verformbaren Tragholm, während das Kupplungsteil der Biegevorrichtung an der Oberseite einer der beiden gegeneinander beweglichen Formen der Biegepresse angeordnet ist. Dadurch erfolgt die Zentrierung der Glasscheibe in der Biegepresse während der Schließbewegung der Biegepresse, d. h. kurz bevor die Biegeformen die Glasscheibe ergreifen.

Bei dieser bekannten Vorrichtung, bei der die genaue Positionierung der Glasscheibe in der Biegepresse durch die Preßwerkzeuge selbst kurz vor der Berührung der Glasscheibe mit den Formflächen der Presse erfolgt, kann es vorkommen, daß die Glasscheibe, die durch den Zentriervorgang in eine leicht pendelnde Bewegung versetzt wird, beim Schließen der Presse noch nicht zur Ruhe gekommen ist. Infolgedessen ist eine genaue Positionierung mit dieser bekannten Vorrichtung nicht in allen Fällen sichergestellt.

Der Erfindung liegt demgegenüber die Aufgabe zugrunde, eine Vorrichtung der eingangs genannten Art, jedoch mit einem nicht verformbaren Tragholm, so auszubilden, daß eine möglichst hohe Genauigkeit der Position der Glasscheibe in der Biegepresse erreicht wird.

Erfindungsgemäß wird diese Aufgabe dadurch gelöst, daß das Kupplungsteil der Biegevorrichtung oberhalb der Biegepresse an dem Rahmen der Biegevorrichtung und das Kupplungsteil der Transportvorrichtung an dem Wagen angeordnet ist und daß der horizontale Tragholm in der Mitte starr an dem Wagen befestigt ist.

Die erfindungsgemäße Anordnung des der Biegevorrichtung zugeordneten Kupplungsteils an dem Rahmen der Biegevorrichtung ermöglicht die Zentrierung der Glasscheibe unabhängig von der Schließbewegung der Biegepresse, das heißt zu einem Zeitpunkt, bevor die Schließbewegung der Presse beginnt. Infolgedessen können durch die Zentrierung eventuell hervorgerufene Pendelbewegungen vor dem Schließen der Presse zur Ruhe kommen bzw. ihre Amplitude so stark verringern, daß störende Lageverschiebungen auf ein Minimum reduziert werden. In demselben Sinn wirkt ferner die starre Befestigung des Tragholms an dem Transportwagen, die die unmittelbare Übertragung der Zentrierbewegung auf den Tragholm erlaubt.

Die seitlichen Lagerpunkte des Tragholms an dem Tragrahmen erlauben darüber hinaus eine relative Verschiebung der Enden des Tragholms in seiner Längsrichtung. Dadurch werden auch solche Ungenauigkeiten in der Position des Transportwagens ausgeschaltet bzw. auf ein Minimum reduziert, die durch unkontrollierbare Ausdehnungen und Verwerfungen des Tragrahmens und des Transportwagens selbst hervorgerufen werden. Die durch die beträchtliche Erwärmung des Tragrahmens, der bekanntlich in den Erwärmungsofen hineinragt, hervorgerufene Längenausdehnung kann nämlich bei einer Länge des Transportwagens von zwei bis drei Metern mehr als zehn Millimeter betragen.

Besondere Ausgestaltungen und Weiterbildungen der Erfindung sind Gegenstand der Unteransprüche.

Ein bevorzugtes Ausführungsbeispiel der Erfindung ist in den Zeichnungen dargestellt. Von den Zeichnungen zeigt

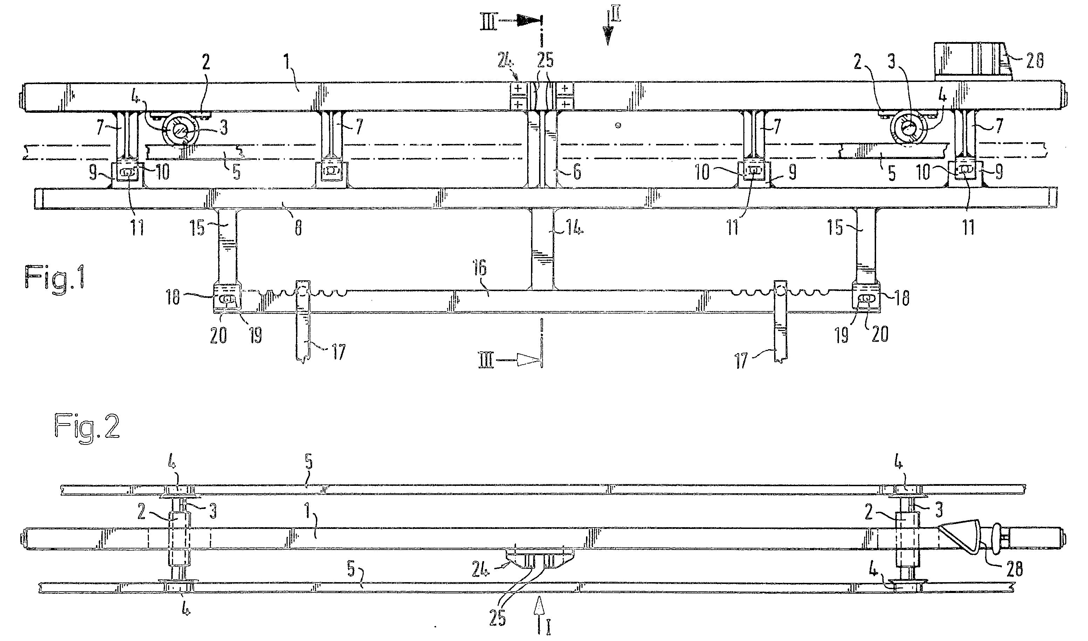

Fig. 1 einen Transportwagen in einer Seitenansicht,

Fig. 2 eine Ansicht von oben auf den in Fig. 1 dargestellten Transportwagen,

Fig. 3 einen teilweisen Querschnitt in der senkrechten Mittelebene durch eine Biegestation und

Fig. 4 eine Draufsicht auf die in Fig. 3 dargestellte Biegestation.

Der Transportwagen 1 weist einen starren Grundrahmen in Form eines Vierkantrohres auf, an dem zwei Lagerböcke 2 angeordnet sind, die die Achsen 3 tragen, auf denen die Räder 4 angeordnet sind. Die Räder 4 laufen auf Schienen 5, die oberhalb des Ofens zum Erwärmen der Glasscheiben und der verschiedenen Bearbeitungsstationen angeordnet sind.

An dem Grundrahmen sind nach unten sich erstreckende Streben 6, 7 angebracht. Die Strebe 6 ist in der Mitte des Grundrahmens angeordnet. An diesen Streben 6, 7 ist parallel zum Grundrahmen ein Längsholm 8 angebracht. Dieser Längsholm 8 ist in der Mitte mit der mittleren senkrechten Strebe 6 fest verbunden, beispielsweise verschweißt. Die Befestigung an den Streben 7 erfolgt über an dem Längsholm angeschweißte, sich nach oben erstreckende Laschen 9, die mit am Ende der Streben 7 angeordneten entsprechenden Laschen 10 zusammenwirken. Zur Verbindung der Laschen 9, 10 miteinander dienen Bolzen 11. In den Laschen 9 sind in horizontaler Richtung sich erstreckende Langlöcher vorgesehen. Die Bolzen 11 durchdringen diese Langlöcher. Die aus den Laschen 9, 10 und den Bolzen 11 bestehende Verbindung hat ausreichend Spiel, um ein Gleiten in horizontaler Richtung der miteinander in Eingriff stehenden Teile zu gestatten.

An dem Längsholm 8 sind seinerseits wiederum eine mittlere Strebe 14, sowie eine vordere und eine hintere Strebe 15 angebracht, vorzugsweise angeschweißt. Die Streben 14, 15 tragen einen unteren Tragholm 16, auf dem seinerseits zangenförmige Greifvorrichtungen 33 über entsprechende Gehänge 17 aufliegen. Der Längsholm 16 ist an der mittleren Strebe 14 wiederum starr befestigt, beispielsweise wie dargestellt angeschweißt, während er an den Streben 15 gleitend gelagert ist. Zu diesem Zweck sind an den Enden der Streben 15 den Tragholm 16 beidseitig übergreifende Laschen 18 angebracht, die in horizontaler Richtung verlaufende Langlöcher 19 aufweisen. Die Langlöcher 19 nehmen einen Bolzen 20 auf, der in einer Bohrung im Tragholm 16 angeordnet ist.

In der Mitte des Grundrahmens ist an diesem seitlich ein Kupplungsteil 24 angeordnet. Dieses umfaßt zwei im Abstand voneinander angeordnete vorspringende Führungsstücke 25, die einen sich zur Mitte hin verjüngenden Spalt bilden, in den das Gegenstück der Kupplung eingreift, wie es in F i g. 3 dargestellt ist.

Der Grundrahmen weist außerdem an dem einen Ende ein ähnlich aufgebautes Kupplungsteil 28 auf. In dieses Kupplungsteil greift ein nicht dargestellter Zapfen der ebenfalls nicht dargestellten Antriebsvorrichtung ein, wenn der Transportwagen taktweise von einer Bearbeitungsstation in die nächsten geschoben wird.

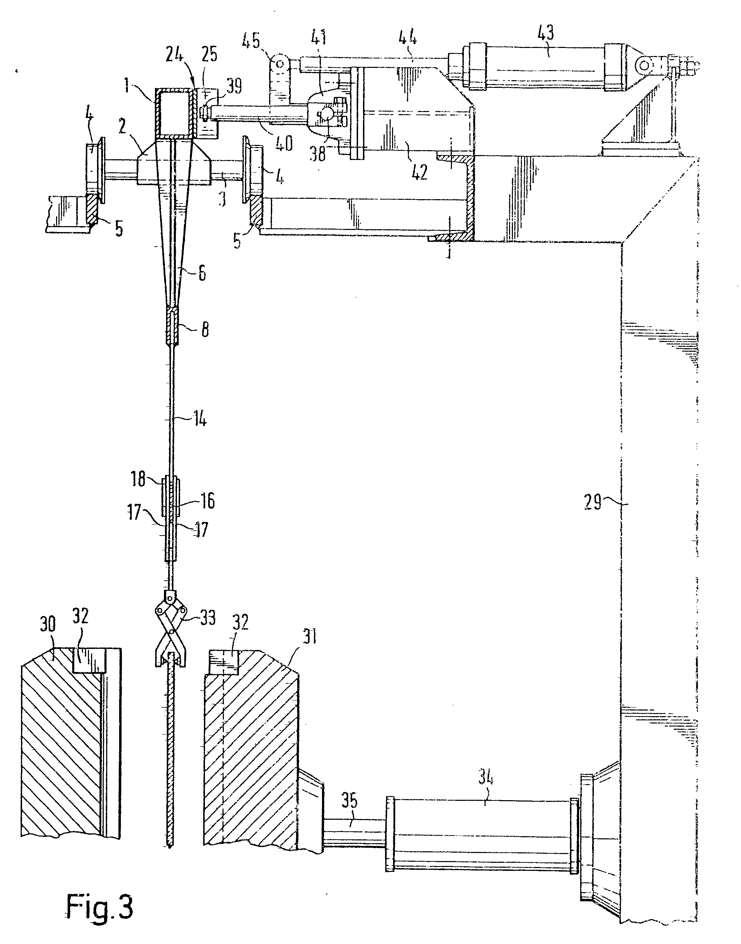

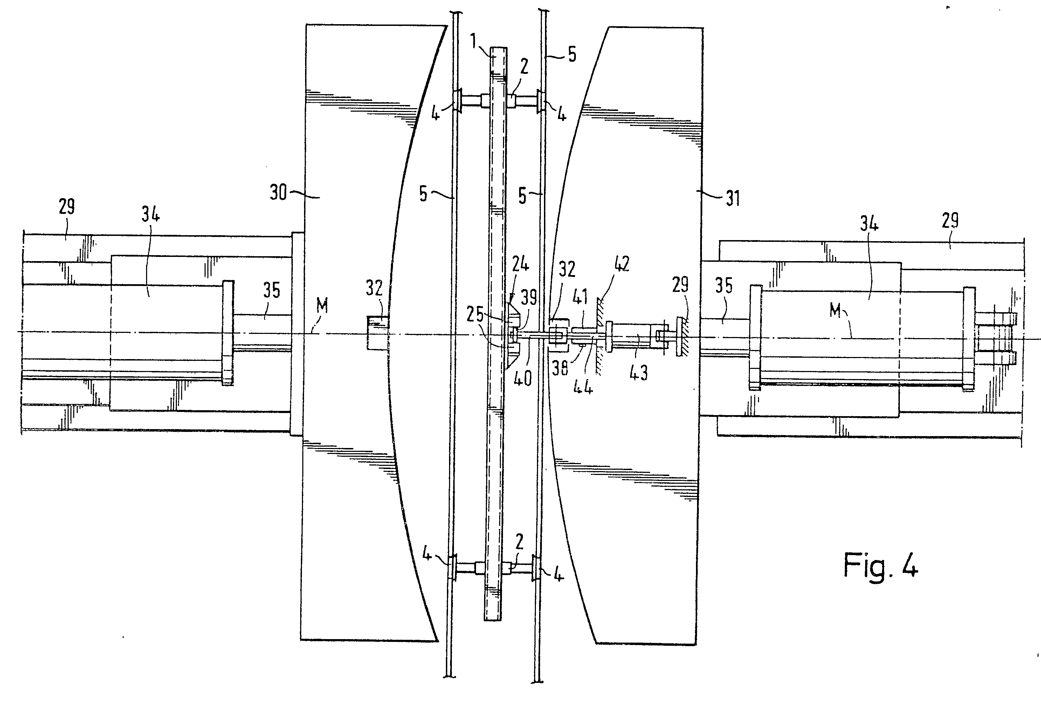

Aus Fig. 3 und 4 erkennt man die Arbeitsweise der Arretierungsvorrichtung in der Biegestation. An einem Rahmen 29 ist die Biegevorrichtung mit allen zugehörenden Einrichtungen aufgebaut. Wesentlicher Bestandteil sind die beiden in Form einer Presse zusammenwirkenden Biegewerkzeuge 30 und 31, die in schematischer Darstellung wiedergegeben sind. In den Biegewerkzeugen sind am oberen Rand Aussparungen 32 vorgesehen, die beim Biegevorgang die zangenförmigen Greifvorrichtungen 33 aufnehmen. Die Biegewerkzeuge 30, 31 werden von Druckzylindern 34 über deren Kolbenstangen 35 betätigt.

An dem Rahmen 29 sind ferner die Schienen 5 und ein mit dem Kupplungsteil 24 an dem Transportwagen zusammenwirkende Kupplungsteil 39 angeordnet. Dieser besteht aus einem um eine Achse 38 in vertikaler Richtung verschwenkbaren Kupplungszapfen, der am Ende einer verschwenkbaren Stange 40 angeordnet ist. Die Achse 38 ist in einem Lagerbock 41 verschwenkbar gelagert, wobei der Lagerbock 41 mit einer Konsole 42 verschraubt ist, die an dem Rahmen 29 angeordnet ist. Zum Verschwenken der Stange 40 dient ein doppelt wirkender Druckzylinder 43, dessen Kolbenstange 44 an einem an der Stange 40 angebrachten Auge 45 angreift. Die Stange 40 mit dem Kupplungszapfen 39 ist in der senkrechten Mittelebene M—M der Biegevorrichtung angeordnet, so daß die volle Symmetrie zu den Biegewerkzeugen 30, 31 gewährt ist.

**Patentansprüche**

1. Vorrichtung zum Transportieren einer an zangenförmigen Greifvorrichtungen (33) hängenden Glasscheibe durch einen Ofen, eine mit Preßwerkzeugen ausgerüstete Biegestation und ggf. eine Vorspannstation, bestehend aus einem oberhalb des Ofens bzw. der Biegestation verfahrbaren Wagen (1) an dem ein nach unten ragender Tragrahmen mit einem die zangenförmigen Greifvorrichtungen (33) tragenden horizontalen Tragholm (16) befestigt ist, wobei die Transportvorrichtung einerseits und die Biegevorrichtung andererseits mit zusammenwirkenden Kupplungsteilen (24, 39) zum Arretieren der Transportvorrichtung oberhalb der Biegeform versehen sind, die jeweils mittig an der Transportvorrichtung bzw. an der Biegevorrichtung angeordnet sind, und wobei der horizontale Tragholm (16) in seinen seitlichen Lagerpunkten in horizontaler Ebene verschiebbar gelagert ist, dadurch gekennzeichnet, daß das Kupplungsteil (39) der Biegevorrichtung oberhalb der Biegepresse an dem Rahmen (29) der Biegevorrichtung und das Kupplungsteil (24) der Transportvorrichtung an dem Wagen (1) angeordnet ist und daß der horizontale Tragholm (16) in der Mitte starr an dem Wagen (1) befestigt ist.

2. Vorrichtung nach Anspruch 1, dadurch gekennzeichnet, daß der Tragholm (16) über vertikale Streben (14, 15) an einem parallel zu ihm angeordneten Längsholm (8) befestigt ist, der seinerseits an dem Wagen (1) in der Mitte mittels einer Strebe (6) starr und an weiteren Streben (7) in horizontaler Richtung verschiebbar gelagert ist.

3. Vorrichtung nach Anspruch 1 oder 2, dadurch gekennzeichnet, daß der an der Biegevorrichtung angeordnete Kupplungsteil (39) in Form eines Zapfens am Ende einer in der vertikalen Mittelebene der Biegevorrichtung verschwenkbaren Stange (40) ausgebildet ist.

4. Vorrichtung nach Anspruch 1 bis 3, dadurch gekennzeichnet, daß die verschiebbare Befestigung des Tragholms (16) aus Langlochführungen besteht.

## Claims

1. An apparatur for transporting a glass sheet, hanging from tongs-like gripping parts (33), through a furnace, a bending station having pressing tools and possibly a firststage tempering station, made up of a carriage (1) able to be moved along over the furnace or the bending station on which there is fixed a downwardly stretching support frame with a horizontal support beam (16) supporting the tongs-like gripping parts (33), and the transport apparatus on the one hand and the bending apparatus on the other hand have coupling parts (24, 39) working together for stopping the transport apparatus over the bending mold, the coupling parts being placed in each case at the middle of the transport apparatus or of the bending apparatus and the horizontal support beam (16) is so supported that it may be moved in a horizontal plane in its side bearing points, characterized in that the coupling part (39) of the bending apparatus is placed over the bending press from the frame (29) of the bending apparatus and the coupling part (24) of the transport apparatus is placed on the carriage (1) and in that the horizontal support beam (16) is fixed in the middle stiffly on the carriage (1).

2. An apparatus as claimed in claim 1, characterized in that the support beam (16) is fixed by way of uprights (14, 15) on a lengthways beam (8), placed parallel to it, and which for its part is locked on the carriage (1) in the middle by way of a support rods (7) so that it may be moved in a horizontal direction.

3. An apparatus as claimed in claim 1 or claim 2, characterized in that the coupling part (39), placed on the bending apparatus, has the form of a pin at the end of a rod (40) able to be turned in the upright middle plane of the bending apparatus.

4. An apparatus as claimed in anyone of claims 1 to 3, characterized in that the system for supporting the support beam (16) so that it may be moved is made up of guide slots.

## Revendications

1. Dispositif servant à transporter une feuille de verre suspendue à des organes de préhension en forme de pinces (33) à travers un four, un poste de bombage équipé d'outils de presse et le cas échéant un poste de trempe, constitué d'un wagonnet (1) pouvant se déplacer au-dessus du four ou du poste de bombage et auquel est fixé un cadre porteur s'étendant vers le bas équipé d'une longrine de support horizontale (16) portant les organes de préhension en forme de pinces, le dispositif de transport, d'une part, et le dispositif de bombage, d'autre part, étant pourvus de pièces d'accouplement coopérantes (24, 39) qui sont destinées à immobiliser le dispositif de transport au-dessus du moule de bombage et qui sont prévues chaque fois au milieu du dispositif de transport et du dispositif de bombage, et la longrine horizontale (16) étant montée à coulissement dans un plan horizontal en ses points de support latéraux, caractérisé en ce que la pièce d'accouplement (39) du dispositif de bombage est disposée au-dessus de la presse de bombage sur le cadre (29) du dispositif de bombage et la pièce d'accouplement (24) du dispositif de transport est disposée sur le wagonnet (1), la longrine de support horizontale (16) étant fixée rigidement en son milieu au wagonnet (1).

2. Dispositif suivant la revendication 1, caractérisé en ce que la longrine de support (16) est fixée par l'intermédiaire de tirants verticaux (14, 15) à une longrine longitudinale (8) qui lui est parallèle et qui, pour sa part, est montée sur le wagonnet (1) rigidement en son milieu au moyen d'un tirant (6) et à coulissement dans le sens horizontal au moyen d'autres tirants (7).

3. Dispositif suivant la revendication 1 ou 2, caractérisé en ce que la pièce d'accouplement (39) associée au dispositif de bombage a la forme d'un tenon prévu à extrémité d'une tige (40) pouvant pivoter dans le plan médian vertical du dispositif de bombage.

4. Dispositif suivant les revendications 1 à 3, caractérisé en ce que la fixation coulissante de la longrine de support (16) est réalisée par des boutonnières de guidage.

Fig.1

Fig.2

Fig.3

Fig. 4